# EUROPEAN PATENT SPECIFICATION

(11) **EP 1 496 139 B1**
(45) Date of publication and mention of the grant of the patent: **27.07.2011**
(21) Application number: 03715727.8
(22) Date of filing: 02.04.2003
(51) Int. Cl.: C23C 22/60, F16C 33/72

(54) **BEARING SEAL COMPRISING A SURFACE TREATED STEEL SHEET**
LAGERDICHTUNG UMFASSEND EIN OBERFLÄCHENBEHANDELTES STAHLBLECH
JOINT DE ROULEMENT COMPRENANT UNE TOLE D'ACIER TRAITEE EN SURFACE

(30) Priority: 05.04.2002 JP 2002103973
(43) Date of publication of application: 12.01.2005
(73) Proprietor: Toyo Kohan Co., Ltd., Tokyo 102-8447 (JP)
(72) Inventor: Komai, Masao, TOYO KOHAN CO., LTD., Kudamatsu-shi, Yamaguchi 744-8611 (JP); Yoshikawa, Masanori, TOYO KOHAN CO., LTD., Kudamatsu-shi, Yamaguchi 744-8611 (JP); Shimizu, Nobuyoshi, TOYO KOHAN CO., LTD., Kudamatsu-shi, Yamaguchi 744-8611 (JP)
(74) Representative: Vossius & Partner
(86) International application number: PCT/JP2003/004212
(87) International publication number: WO 2003/085170

(56) References cited:
- GB-A- 1 244 399
- JP-A- 52 076 236
- US-A- 4 450 209

## Description

The present invention concerns the use of a surface treated steel sheet in a bearing seal excellent in corrosion resistance and wear resistance. The surface treated steel sheet is provided with a coating made from an aqueous solution containing water soluble or water dispersible lithium silicate formed of silicic acid or silicate and lithium hydroxide. Furthermore the present invention concerns a bearing seal prepared by using the surface treated steel sheet.

Generally, tin plates or galvanized plates have been applied with phosphate treatment or chromate treatment long since for improving the corrosion resistance but the wear resistance of them are not sufficient.

The treating method using a solution containing a silicate to a steel sheet includes a method of treating a galvanized plate with a solution containing a sodium silicate as described in JP-B-38-20952, but the corrosion resistance thereof is not sufficient. Further, a method of treating with a solution comprising chromium oxide and a silicate as a main ingredient described in JP-B-4-1164 intends to prevent corrosion at high temperature and, accordingly, a chromium oxide content is large and adhesion of fabricated coating film when treating by using the same is extremely poor. Further, since this does not contain lithium silicate, corrosion resistance at normal temperature is poor.

Further, a method of coating a treating solution formed by adding chromic acid to a silicic acid sol described in JP-B-42-14050 provides no sufficient corrosion resistance in a high temperature and high humidity atmosphere such as at a temperature of 40°C and at a relative humidity of 90%, in which rust tends to be formed and the corrosion resistance of the fabricated portion under outdoor exposure is remarkably poor.

Further, as shown in JP-B-44-19686, when a polymer is added to the silicate, the corrosion resistance is sometimes deteriorated. As shown in JP-B-45-5130, when a phosphate salt or chromic acid is added to the silicate, while the corrosion resistance is improved, it results in a problem in view of the stability of the treating solution such as separation of the treating solution.

As described above, a surface treated steel sheet for use in a bearing seal of good wear resistance and excellent corrosion resistance, as well as a bearing seal using the same have not yet been found.

The present invention has an object of providing a bearing seal comprising a surface treated steel sheet being excellent in corrosion resistance and wear resistance.

A bearing seal according to the present invention is characterized by a surface treated steel sheet provided with a coating film having a film thickness after drying of from 10 to 800 mg/m² as Si by coating an aqueous solution comprising from 5 to 600 g/L of a water soluble or water dispersible lithium silicate having a molar ratio of silicic acid or silicate : lithium hydroxide within a range of from 20:1 to 1:1.

Further, a bearing seal according to the present invention relates to the use of the surface treated steel sheet described above in a bearing seal.

The present invention is applicable to known surface treated steel sheets applied with zinc plating, zinc alloy plating comprising, for example, Zn-Ni or Zn-Fe using zinc as a main ingredient, Zn-Co-Mo plating, bright Zn plating or bright Zn alloy plating of a thickness of from 0.1 to 0.6 mm. Particularly, bright Zn-Co-Mo plating having an appearance of golden color is preferred showing less change of the appearance in an acceleration test for corrosion resistance under isothermal and isohumidity state. The amount of Zn plating is preferably within a range from 5 to 30/m². When it is less than 5 g/m², the corrosion resistance is insufficient. When it exceeds 30 g/m², it results in no problem in view of characteristics but this increases cost and is uneconomical.

In a case of treating the steel sheets with a treating solution comprising a silicate and lithium hydroxide, the corrosion resistance is improved remarkably and a coating film of excellent wear resistance is formed.

Lithium silicate used in the invention is water soluble or water dispersible and lithium silicate is prepared actually by weighing a silicic acid sol or a sodium silicate or a potassium silicate as silicic acid or a silicate, and lithium hydroxide respectively so as to provide a required molar ratio and mixing them.

As the composition of them, the lithium silicate is preferably within a concentration rage of from 5 to 600 g/L. When the concentration is less than 5 g/L, improving effect for the corrosion resistance or the wear resistance is not recognized, whereas when it is exceeds 600 g/L, the liquid stability is deteriorated, which is not preferred. Further, as the mixing ratio of silicic acid or silicate, a range of molar ratio of silicic acid (or silicate) : lithium hydroxide = 20:1 to 1:1 is effective for the treatment. In a case where the content of lithium hydroxide is less than the ratio described above, the corrosion resistance tends to degraded, particularly, and curing of the treated coating film is slow taking a long drying time which is not suitable. Further, in a case where the ratio is more than the range described above, the wear resistance becomes insufficient.

As the temperature for the treating solution, 20 to 70°C is optimal. While it may be 20°C or lower, it takes a long time for drying. On the other hand, at 70°C or higher, water evaporates vigorously to bring about a problem in view control of the concentration (viscosity control). For the treating method known methods such as a roll wringing method, roll coating method and spraying method after immersion are applicable.

Further, while drying may be applied as normal temperature, compulsory drying is more preferred in a case where the formed coating film is thick. Film thickness is determined by controlling the concentration of lithium silicate in the solution to be used, or controlling a space between a steel sheet to be treated and a roll for use in the roll coating.

The amount of the coating film obtained by the method according to the invention can be controlled by determining Si in the silicic acid or the silicate as the main ingredient by fluorescence X-ray analysis in the film thickness.

A preferred range for the thickness of the dry film to be formed is from 10 to 800 mg/m² as Si, which satisfies both the corrosion resistance and the wear resistance. A film thickness of less than 10 mg/m² tends to cause flaws and, particularly, deteriorates the corrosion resistance. On the other hand, while it may exceed 800 mg/m², this is not economical.

The range for the optimal conditions in the treating method according to the invention is summarized as below.
(1) Composition of treating solution
   (i) water soluble or water dispersible lithium silicate formed of silicic acid or silicate and lithium hydroxide of 5 to 600 g/L,
   (ii) molar ratio of silicic acid or silicate : lithium hydroxide in (i) of 20:1 to 1:1,
(2) temperature for the treating solution of from 30 to 70°C
(3) a thickness of dry film to be formed of 10 to 800 mg/m² as Si.

The treated coating film obtained by the treatment according to the invention is excellent in the corrosion resistance and also excellent in the wear resistance compared with the known chromic acid treatment.

Although the structure of the protective coating film obtained by the method according to the invention is not apparent but it is considered that a strong insoluble protective coating film comprising a lithium silicate is formed on the surface of a metal sheet.

### Example

The effect of the present invention is to be described specifically with reference to examples.

### (Example 1)

Bright Zn-1%Co-0.1%Mo plated steel sheet (sheet thickness: 0.2 mm, Zn plated amount: 5 g/m²) was degreased by a customary method and water washed, and then the plated steel sheet was immersed in a treating solution containing the following silicate, subjected to roll coating and dried.

Treating condition of the invention:

| | |
|---|---|
| Lithium silicate with the molar ratio between silicic acid and lithium hydroxide of 4:1 | 100 g/L |
| Bath temperature | 50°C |
| Film thickness after drying (as Si) | 800 mg/m² |

### (Example 2)

In the same manner as in Example 1, after degreasing a bright Zn-1%Co-0.1%Mo plated steel sheet (sheet thickness: 0.2 mm, Zn plated amount: 10 g/m²), the plated steel sheet was immersed in a treating solution containing the following silicate, subjected to roll coating and dried.

Treating condition of the invention:

| | |
|---|---|
| Lithium silicate with the molar ratio between sodium silicate and lithium hydroxide of 5:1 | 300 g/L |
| Bath temperature | 70°C |
| Film thickness (as Si) | 200 mg/m² |

### (Example 3)

A bright electric zinc plated steel sheet (sheet thickness: 0.2 mm, Zn plated amount: 30 g/dm²) was immersed in a treating solution of the following condition, subjected to roll coating and dried.

Treating condition of the invention:

| | |
|---|---|
| Lithium silicate with the molar ratio between potassium silicate and lithium hydroxide of 5:1 | 100 g/L |
| Bath temperature | 50°C |
| Film thickness (as Si) | 10 mg/m² |

### (Example 4)

Zn-11%Ni plated steel sheet (sheet thickness: 0.6 mm, Zn plated amount: 20 g/m²) was immersed in a treating solution of the following condition, subjected to roll coating and dried.

Treating condition of the invention:

| | |
|---|---|
| Lithium silicate with the molar ratio between sodium silicate and lithium hydroxide of 20:1 | 5 g/L |
| Bath temperature | 60°C |
| Film thickness (as Si) | 500 mg/m² |

### (Example 5)

A bright zinc plated steel sheet (sheet thickness: 0.2 mm, Zn plated amount: 30 g/m²) was immersed in a treating solution of the following condition, subjected to roll coating and dried.

Treating condition of the invention:

| | |
|---|---|
| Lithium silicate with the molar ratio between sodium silicate and lithium hydroxide of 1:1 | 20 g/L |
| Bath temperature | 60°C |
| Film thickness (as Si) | 50 mg/m² |

### (Example 6)

Bright Zn-1%Co-0.02%Mo plated steel sheet (sheet thickness: 0. 1 mm, Zn plated amount: 10 g/m²) after water washed was immersed in a treating solution of the following condition, subjected to roll coating and dried.

Treating condition of the invention:

| | |
|---|---|
| Lithium silicate with the molar ratio between silicic acid and lithium hydroxide of 10:1 | 500 g/L |
| Bath temperature | 70°C |
| Film thickness (as Si) | 100 mg/m² |

### (Example 7)

Zn-20%Fe plated steel sheet (sheet thickness: 0.5 mm, Zn plated amount: 10 g/m²) was immersed in a treating solution of the following condition, subjected to roll coating and dried.

Treating condition of the invention:

| | |
|---|---|
| Lithium silicate with the molar ratio between silicic acid and lithium hydroxide of 10:1 | 30 g/L |
| Bath temperature | 50°C |
| Film thickness (as Si) | 600 mg/m² |

### (Example 8)

Bright Zn plated steel sheet (sheet thickness: 0.2 mm, Zn plated amount: 5 g/m²) was immersed in a treating solution of the following condition, subjected to roll coating and dried.

Treating condition of the invention:

| | |
|---|---|
| Lithium silicate with the molar ratio between sodium silicate and lithium hydroxide of 20:1 | 5 g/L |
| Bath temperature | 20°C |
| Film thickness (as Si) | 300 mg/m² |

### (Comparative Example 1)

A bright Zn plate steel sheet (sheet thickness: 0.2 mm, Zn plated amount: 5 g/m²) identical with that in Example 8 was used, and known electrolytic chromic acid treatment was applied to deposit by 10 mg/m² as Cr.

Specimens prepared as described above were evaluated for the corrosion resistance and the wear resistance under the test conditions shown below. Table 1 shows the result of evaluation.

### [Corrosion resistance]

According to JIS Z 2371, a 24 hrs test was conducted and the degree of formation of red rust and the degree of formation of white rust were evaluated based on Rating No.

### [Wear resistance]

Evaluation was made depending on the presence or absence of flaws on the surface of specimens after causing high quality paper with a 500 g weight being placed thereon (pressure; 5 g/cm²) to slide on the surface of the specimen for 500 times. Evaluation was given as "O" in a case with no flaws and as "x" in a case with flaws. Only the case "O" was evaluated as with no practical problem.

**Table 1: Evaluation result for characteristics**

| Example or Comp. Example | Evaluation result for characteristics | |
|---|---|---|
| | Corrosion resistance (White rust/red rust) | Wear resistance |
| Example 1 | 9/10 | ○ |
| Example 2 | 9/10 | ○ |
| Example 3 | 5/10 | ○ |
| Example 4 | 9/10 | ○ |
| Example 5 | 9/10 | ○ |
| Example 6 | 9/ 10 | ○ |
| Example 7 | 9/10 | ○ |
| Example 8 | 9/10 | ○ |
| Comp. Example 1 | 1/5 | × |

As shown in Table 1, it has been found that the invention is excellent in the corrosion resistance and the wear resistance compared with the existent post treatment by chromic acid. Further, when it was fabricated into a bearing seal and put to an actual machine test, it could be used with no practical problem.

### Industrial Applicability

The surface treated steel sheet applied with the treatment according to the invention is excellent in the corrosion resistance and the wear resistance compared with existent electrolytic chromic acid treatment. Further, when it was fabricated into a bearing seal, it could be also used with the no practical problem.

## Claims

1. A bearing seal comprising a surface treated steel sheet provided with a coating film having a film thickness after drying of from 10 to 800 mg/m² as Si by coating an aqueous solution comprising from 5 to 600 g/L of a water soluble or water dispersible lithium silicate having a molar ratio of silicic acid or silicate : lithium hydroxide within a range of from 20:1 to 1:1.

2. The bearing seal according to claim 1, wherein the surface treated steel sheet is applied with zinc plating, zinc alloy plating, Zn-Co-Mo plating, bright Zn plating or bright Zn alloy plating.

3. The use of a surface treated steel sheet provided with a coating film having a film thickness after drying of from 10 to 800 mg/m² as Si by coating an aqueous solution comprising from 5 to 600 g/L of a water soluble or water dispersible lithium silicate having a molar ratio of silicic acid or silicate : lithium hydroxide within a range of from 20:1 to 1:1, in a bearing seal.

4. The use according to claim 3, wherein the surface treated steel sheet is applied with zinc plating, zinc alloy plating, Zn-Co-Mo plating, bright Zn plating or bright Zn alloy plating.

## Patentansprüche

1. Eine Lagerdichtung, umfassend ein oberflächenbehandeltes Stahlblech, das durch Aufbringen einer wässrigen Lösung, die 5 bis 600 g/L eines wasserlöslichen oder in Wasser dispergierbaren Lithiumsilikats mit einem molaren Verhältnis Kieselsäure oder Silikat : Lithiumhydroxid innerhalb eines Bereichs von 20:1 bis 1:1 umfasst, mit einem Beschichtungsfilm mit einer Filmdicke nach dem Trocknen von 10 bis 800 mg/m², als Si, versehen ist.

2. Die Lagerdichtung gemäß Anspruch 1, wobei das oberflächenbehandelte Stahlblech mit einem Zinküberzug, einem Überzug aus einer Zinklegierung, einem Zn-Co-Mo-Überzug, einem Überzug aus Glanzzink oder einem Überzug aus einer Glanzzinklegierung versehen ist.

3. Die Verwendung eines oberflächenbehandelten Stahlblechs, das durch Aufbringen einer wässrigen Lösung, die 5 bis 600 g/L eines wasserlöslichen oder in Wasser dispergierbaren Lithiumsilikats mit einem molaren Verhältnis Kieselsäure oder Silikat : Lithiumhydroxid innerhalb eines Bereichs von 20:1 bis 1:1 umfasst, mit einem Beschichtungsfilm mit einer Filmdicke nach dem Trocknen von 10 bis 800 mg/m², als Si, versehen ist, in einer Lagerdichtung.

4. Die Verwendung gemäß Anspruch 3, wobei das oberflächenbehandelte Stahlblech mit einem Zinküberzug, einem Überzug aus einer Zinklegierung, einem Zn-Co-Mo-Überzug, einem Überzug aus Glanzzink oder einem Überzug aus einer Glanzzinklegierung versehen ist.

## Revendications

1. Joint de palier comprenant une feuille d'acier traitée en surface équipée d'un film de revêtement ayant une épaisseur de film après séchage de 10 à 800 mg/m² sous forme de Si, par revêtement d'une solution aqueuse renfermant de 5 à 600 g/l d'un silicate de lithium soluble ou pouvant être dispersé dans l'eau, ayant un rapport molaire acide silicique ou silicate : hydroxyde de lithium situé dans la plage de 20:1 à 1:1.

2. Joint de palier conforme à la revendication 1,
dans lequel
la feuille d'acier traitée en surface est munie d'une couche de galvanisation en zinc, en un alliage de zinc, en Zn-Co-Mo, en zinc brillant ou en un alliage de zinc brillant.

3. Utilisation d'une feuille d'acier traitée en surface équipée d'un film de revêtement ayant une épaisseur de film après séchage de 10 à 800 mg/m² sous forme de Si, par revêtement d'une solution aqueuse renfermant de 5 à 600 g/l d'un silicate de lithium soluble ou pouvant être dispersé dans l'eau, ayant un rapport molaire acide silicique ou silicate : hydroxyde de lithium situé dans la plage de 20:1 à 1:1 dans un joint de palier.

4. Utilisation conforme à la revendication 3,
selon laquelle
la feuille d'acier traitée en surface est munie d'une couche de galvanisation en zinc, en un alliage de zinc, en Zn-Co-Mo, en zinc brillant ou en un alliage de zinc brillant.
